# EUROPÄISCHE PATENTSCHRIFT

(11) **EP 3 179 214 B1**
(45) Veröffentlichungstag und Bekanntmachung des Hinweises auf die Patenterteilung: **01.08.2018**
(21) Anmeldenummer: 16187795.6
(22) Anmeldetag: 08.09.2016
(51) Int. Cl.: G01D 5/20, G01D 5/245

(54) **INDUKTIVE POSITIONSMESSEINRICHTUNG**
INDUCTIVE POSITION MEASUREMENT DEVICE
DISPOSITIF INDUCTIF DE MESURE DE POSITION

(30) Priorität: 08.12.2015 DE 102015224589
(43) Veröffentlichungstag der Anmeldung: 14.06.2017
(73) Patentinhaber: Dr. Johannes Heidenhain GmbH, 83301 Traunreut (DE)
(72) Erfinder: HEUMANN, Martin, 83278 Traunstein (DE); TIEMANN, Marc Oliver, 83329 Waging am See (DE); FRANK, Alexander, 83377 Vachendorf (DE)

(56) Entgegenhaltungen:
- EP-A1- 2 851 655
- EP-A2- 2 581 711

## Beschreibung

### GEBIET DER TECHNIK

Induktive Positionsmesseinrichtungen dienen zur Bestimmung der Position zweier zueinander bewegbarer Bauteile. Sie werden beispielsweise als Drehgeber zur Bestimmung der Winkellage zweier relativ zueinander drehbaren Maschinenteile oder als Längenmesssystem zur direkten Messung von Längsverschiebungen entlang einer Achse verwendet.

Derartige induktive Positionsmesseinrichtungen werden als Messgeräte für elektrische Antriebe zur Bestimmung der Relativbewegung bzw. der Relativlage von entsprechenden Maschinenteilen eingesetzt. In diesem Fall werden die erzeugten Positionswerte einer Folgeelektronik zur Ansteuerung der Antriebe über eine entsprechende Schnittstellenanordnung zugeführt. Man unterscheidet zwischen inkrementalen Positionsmesseinrichtungen und absoluten Positionsmesseinrichtungen. Zunehmend werden absolute Positionsmesseinrichtungen gefordert.

### STAND DER TECHNIK

Eine gattungsgemäße absolute induktive Positionsmesseinrichtung ist aus der EP 1081454 B1 bekannt. Die Absolutposition wird durch induktive Abtastung zweier Messteilungen mit geringfügig unterschiedlichen periodischen Messteilungen gewonnen (Noniusprinzip), welche jeweils die Stärke der induktiven Kopplung zwischen einer Erregerwindung und einer Abtastwindung positionsabhängig beeinflussen. Die Spulenanordnungen zur Abtastung der beiden Messteilungen sind im Zwischenraum bzw. im Spalt zwischen den Messteilungen angeordnet.

Die EP 2581711 A2 offenbart eine weitere absolute induktive Positionsmesseinrichtung, bei der die Absolutposition durch induktive Abtastung zweier Messteilungen nach dem Noniusprinzip ermittelt wird. Dabei sind die zwei Messteilungen beidseitig eines Trägers angeordnet, der im Spalt zwischen zwei Abtastwindungen verschiebbar ist. In diesem Träger kann eine Metallebene eingebracht sein, um ein Übersprechen zwischen den beiden Sensoren zu vermeiden.

### ZUSAMMENFASSUNG DER ERFINDUNG

Der Erfindung liegt die Aufgabe zugrunde, eine induktive Positionsmesseinrichtung zu schaffen mit der eine präzise Absolutposition ermittelt werden kann und die eine kompakte und robuste Bauweise aufweist.

Diese Aufgabe wird erfindungsgemäß durch die Merkmale des Anspruches 1 gelöst.

Die induktive Positionsmesseinrichtung umfasst demnach
- eine Maßstabeinheit mit einer in Messrichtung verlaufenden ersten Messteilung und einer parallel dazu verlaufenden und der ersten Messteilung gegenüberliegenden zweiten Messteilung;
- eine Abtasteinheit, die in einem Spalt zwischen der ersten Messteilung und der zweiten Messteilung angeordnet ist und zur Positionsmessung relativ zur Maßstabeinheit in Messrichtung verschiebbar ist, wobei die Abtasteinheit eine erste Spulenanordnung zur Abtastung der ersten Messteilung und zur Erzeugung eines ersten positionsabhängigen Abtastsignals umfasst und die Abtasteinheit eine der ersten Spulenanordnung gegenüberliegende zweite Spulenanordnung zur Abtastung der zweiten Messteilung und zur Erzeugung eines zweiten positionsabhängigen Abtastsignals umfasst,
wobei
zwischen der ersten Spulenanordnung und der zweiten Spulenanordnung zumindest eine Zwischenlage aus weichmagnetischem Material angeordnet ist.

Weichmagnetisches Material sind ferromagnetische Materialien, die sich in einem Magnetfeld leicht magnetisieren lassen. Die magnetische Polarisation in dem Material verstärkt ein äußeres Magnetfeld um die Werkstoffpermeabilität. Das weichmagnetische Material kann in Form von einem massiven Metall, als gebundenes Metallpulver, in Form von keramischen Materialien, sogenannte Ferrite, oder als kunststoffgebundenes Ferrit-Pulver vorliegen.

Das weichmagnetische Material als Zwischenlage hat die Funktion die von der ersten Spulenanordnung ausgehenden Feldlinien des magnetischen Wechselfeldes in der Schicht des Materials der Zwischenlage zu leiten und somit einen geschlossenen und räumlich begrenzten magnetischen Kreis zu bilden, sowie die von der zweiten Spulenanordnung ausgehenden Feldlinien des magnetischen Wechselfeldes in der Schicht des Materials der Zwischenlage zu leiten und somit einen geschlossenen und räumlich begrenzten magnetischen Kreis zu bilden. Die Zwischenlage trennt dadurch die Feldlinien ausgehend von der ersten Spulenanordnung von den Feldlinien ausgehend von der zweiten Spulenanordnung.

Besonders geeignet als Zwischenlage ist ein sandwichartiger Aufbau, bestehend aus einem Kern und eine darauf beidseitig angeordnete Schicht aus weichmagnetischem Material, das bei Wechselfeldern in der Größenordnung um 2 MHz einen großen elektrischen Widerstand, z.B. in der Größenordnung von 1 x 10⁶ Ω aufweist, also praktisch elektrisch nichtleitend ist. Ein derartiges Material ist FFD-Material (Flux Field Directional Material) und ist in Form einer Folie als "sintered ferrite sheet" im Handel erhältlich. Aufgrund der schlechten elektrischen Leitfähigkeit können in diesem Material keine Wirbelströme entstehen, die das Erregerfeld der jeweiligen Spulenanordnung dämpfen.

Der Kern besteht vorzugsweise ebenfalls aus einem weichmagnetischen Material. Insbesondere ist die Permeabilität des Materials des Kerns deutlich - vorzugsweise um ein Vielfaches - größer als die Permeabilität der beidseitig angeordneten Schichten. In diesem Fall nimmt der Kern den von einem äußeren Magnetfeld ausgehenden Störfluss auf und die Schichten geraten nicht in Sättigung. Ist die Positionsmesseinrichtung nämlich einem äußeren Magnetfeld ausgesetzt muss verhindert werden, dass dieses äußere Magnetfeld die funktionalen Schichten sättigt, da sonst die flussverstärkende Wirkung nicht mehr gegeben ist. Als Material für den Kern eignet sich insbesondere weichmagnetischer Stahl.

Die metallene Zwischenlage kann auch Mu-Metall sein, also ein Metall mit einer sehr hohen Permeabilität von über 10.000. Dieses weichmagnetische Material ist gut elektrisch leitfähig, aufgrund der extrem hohen Permeabilität bei Wechselfeldern in der Größenordnung von 2 MHz ist die Endringtiefe der Wechselfelder sehr gering und sie breiten sich nur in wenigen µm Tiefe aus, sodass der effektive elektrische Widerstand sehr groß ist und daher wiederum keine bzw. nur vernachlässigbare Wirbelströme entstehen, die dem Erregerfeld der jeweiligen Spulenanordnung entgegenwirken und es dämpfen können.

Vorteilhafte Ausbildungen der Erfindung entnimmt man den abhängigen Ansprüchen.

### KURZE BESCHREIBUNG DER ZEICHNUNGEN

Einzelheiten und Vorteile der erfindungsgemäßen induktiven Positionsmesseinrichtung ergeben sich aus der nachfolgenden Beschreibung von Ausführungsbeispielen anhand der beiliegenden Figuren.

Es zeigen
- Figur 1: eine perspektivische Ansicht einer ersten induktiven Positionsmesseinrichtung gemäß der Erfindung;
- Figur 2: einen Querschnitt der induktiven Positionsmesseinrichtung aus Figur 1;
- Figur 3: die Ausgestaltung und Abtastung der ersten Messteilung und der zweiten Messteilung im Detail;
- Figur 4: die sich in der ersten Messteilung ausbildenden Wirbelströme;
- Figur 5: eine zweite induktive Positionsmesseinrichtung gemäß der Erfindung im Schnitt, und
- Figur 6: eine alternative Ausgestaltung einer Maßstabeinheit.

### BESCHREIBUNG DER AUSFÜHRUNGSFORMEN

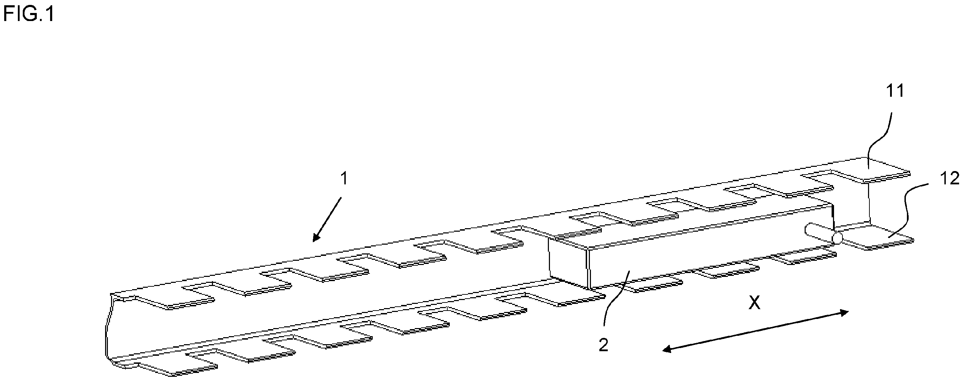

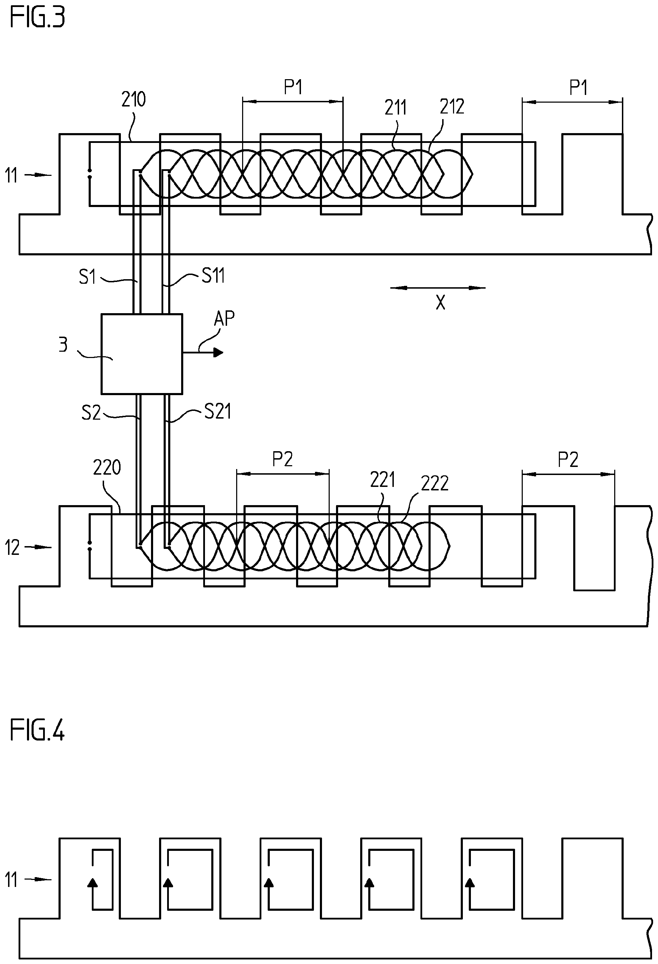

Anhand der Figuren 1 bis 4 wird ein erstes Ausführungsbeispiel der Erfindung näher erläutert. Die Figur 1 zeigt eine Maßstabeinheit 1 mit zwei in Messrichtung X verlaufenden Messteilungen 11 und 12, die einander gegenüberliegend angeordnet sind und zwischen ihnen einen Spalt ausbilden. Die erste Messteilung 11 weist Teilungselemente mit einer ersten Teilungsperiode P1 auf und die zweite Messteilung 12 weist Teilungselemente mit einer zweiten Teilungsperiode P2 auf. Die periodisch angeordneten Teilungselemente der beiden Messteilungen 11, 12 sind induktiv abtastbar ausgestaltet. Hierzu bestehen die Messteilungen 11, 12 jeweils aus einer periodischen Abfolge von in Messrichtung X voneinander beabstandeten elektrisch leitfähigen Teilungselementen. Im dargestellten Ausführungsbeispiel sind diese Teilungselemente flächige Rechtecke. Die Teilungselemente können aber auch andere Formen aufweisen, beispielsweise eine gekrümmte Außenkontur oder auch dreieckförmig. Die Teilungselemente bilden induktive Koppelelemente, welche die Stärke der induktiven Kopplung zwischen einer Erregerwindung 210, 220 und einer Abtastwindung 211, 212, 221, 222 positionsabhängig modulieren, indem sich in einem Teilungselement Wirbelströme ausbilden, die gegen das Erregerfeld wirken. In Figur 4 sind schematisch die sich in den Teilungselementen der Messteilung 11 ausbildenden Wirbelströme dargestellt.

Die Teilungsperiode P1 der ersten Messteilung 11 und die Teilungsperiode P2 der zweiten Messteilung 12 weichen nur geringfügig voneinander ab, so dass daraus eine Absolutposition AP über mehrere dieser Teilungsperioden P1, P2 abgeleitet werden kann. Der absoluten Positionsmessung liegt also das Noniusprinzip zugrunde.

Die induktive Positionsmesseinrichtung umfasst darüber hinaus eine Abtasteinheit 2 zur Abtastung der beiden Messteilungen 11 und 12 der Maßstabeinheit 1, die in dem Spalt zwischen der ersten Messteilung 11 und der zweiten Messteilung 12 angeordnet ist. Zur Positionsmessung ist die Abtasteinheit 2 in Messrichtung X relativ zur Maßstabeinheit 1 verschiebbar. Die Abtasteinheit 2 beinhaltet eine erste Spulenanordnung 21 zur Abtastung der ersten Messteilung 11 und zur Erzeugung zumindest eines ersten positionsabhängigen Abtastsignals S1. Die Abtasteinheit 2 beinhaltet eine zweite Spulenanordnung 22 zur Abtastung der zweiten Messteilung 12 und zur Erzeugung zumindest eines zweiten positionsabhängigen Abtastsignals S2.

Die erste Spulenanordnung 21 weist eine erste Erregerwindung 210 und mehrere erste gegeneinander phasenverschobene periodische Abtastwindungen 211, 212 auf. Ebenso weist die zweite Spulenanordnung 22 zur Abtastung der zweiten Messteilung 12 eine zweite Erregerwindung 220 und mehrere zweite gegeneinander phasenverschobene periodische Abtastwindungen 221, 222 auf. Die ersten Abtastwindungen 211, 212 umfassen jeweils mehrere in Messrichtung X verlaufende periodische Windungen zur gleichzeitigen Abtastung mehrerer in Messrichtung X angeordneter Teilungselemente der ersten Messteilung 11 und zur Bildung mehrerer gegeneinander phasenverschobener erster Abtastsignale S1, S11 mit der Signalperiode P1. Die zweiten Abtastwindungen 221, 222 umfassen jeweils mehrere in Messrichtung X verlaufende periodische Windungen zur gleichzeitigen Abtastung mehrerer in Messrichtung X angeordneter Teilungselemente der zweiten Messteilung 12 und zur Bildung mehrerer gegeneinander phasenverschobener zweiter Abtastsignale S2, S21 mit der Signalperiode P2.

Die Abtasteinheit 2 ist in Figur 3 schematisch dargestellt, um die Funktion der induktiven Abtastung beim Zusammenwirken mit der Maßstabeinheit 1 näher zu erläutern.

Die planare Erregerwindung 210 wird mit einem Erregerstrom derart gespeist, dass ein zeitlich wechselndes elektromagnetisches Erregerfeld im Bereich der Teilungselemente der ersten Messteilung 11 erzeugt wird. Dieser Erregerstrom weist eine Frequenz von 100 kHz bis 10 MHz auf. Die Erregerwindung 210 ist derart räumlich angeordnet, dass sie in der gegenüberliegenden Abfolge der Teilungselemente der ersten Messteilung 11 ein möglichst homogenes elektromagnetisches Feld ausbildet.

Die Abtastwindungen 211, 212 befinden sich innerhalb der Erregerwindung 210. Das von der Erregerwindung 210 generierte Erregerfeld generiert in den Teilungselementen Wirbelströme, die als Gegenfeld gegen das Erregerfeld wirken. In den Abtastwindungen 211, 212 wird aufgrund des ihnen zugeordneten Erregerfeldes eine Spannung induziert, die von der relativen Lage zu den elektrisch leitenden Teilungselementen abhängig ist. Die Erregerwindung 210 ist also mit den Abtastwindungen 211, 212 in Abhängigkeit der relativen Lage der Teilungselemente dazu in Messrichtung X induktiv gekoppelt. Das elektromagnetische Wechselfeld wird durch die Teilungselemente in Messrichtung X positionsabhängig moduliert, dadurch variiert auch die in den Abtastwindungen 211, 212 induzierte Spannung positionsabhängig. Die in den Abtastwindungen 211, 212 jeweils induzierte Spannung wird einer Auswerteeinheit 3 in Form der Abtastsignale S1, S11 zugeführt.

Die planare Erregerwindung 220 wird ebenso mit einem Erregerstrom derart gespeist, dass ein zeitlich wechselndes elektromagnetisches Erregerfeld im Bereich der Teilungselemente der zweiten Messteilung 12 erzeugt wird.

Dieser Erregerstrom weist eine Frequenz von einigen MHz auf. Die Erregerwindung 220 ist derart räumlich angeordnet, dass sie in der gegenüberliegenden Abfolge der Teilungselemente ein möglichst homogenes elektromagnetisches Feld ausbildet.

Die Abtastwindungen 221, 222 befinden sich innerhalb der Erregerwindung 220. Das von der Erregerwindung 220 generierte Erregerfeld generiert in den Teilungselementen Wirbelströme, die als Gegenfeld gegen das Erregerfeld wirken. In den Abtastwindungen 221, 222 wird aufgrund des ihnen zugeordneten Erregerfeldes eine Spannung induziert, die von der relativen Lage zu den elektrisch leitenden Teilungselementen abhängig ist. Die Erregerwindung 220 ist also mit den Abtastwindungen 221, 222 in Abhängigkeit der relativen Lage der Teilungselemente dazu in Messrichtung X induktiv gekoppelt. Das elektromagnetische Wechselfeld wird durch die Teilungselemente in Messrichtung X positionsabhängig moduliert, dadurch variiert auch die in den Abtastwindungen 221, 222 induzierte Spannung positionsabhängig. Die in den Abtastwindungen 221, 222 jeweils induzierte Spannung wird einer Auswerteeinheit 3 in Form der Abtastsignale S2, S21 zugeführt.

Die Abtastsignale S1, S11, S2, S21 liegen an der Auswerteeinheit 3 der Abtasteinheit 2 an, welche dazu konfiguriert ist aus dem Vergleich der Phasenlagen in bekannterWeise ein Schwebungssignal zu erzeugen, das die eindeutige Absolutposition AP der Abtasteinheit 2 relativ zur Maßstabeinheit 1 angibt. Der absolut zu codierende Messbereich ist in bekannter Weise abhängig von dem gewählten Unterschied der beiden Teilungsperioden P1, P2. Besonders vorteilhaft ist, wenn sich über den gesamten absolut zu codierenden Messbereich die Anzahl der Teilungsperioden P1 und die Anzahl der Teilungsperioden P2 um 1 unterscheidet. Die Absolutposition AP wird als digitales Datenwort am Ausgang der Abtasteinheit 2 zur Verfügung gestellt, wobei die Ausgabe vorzugsweise in serieller Form erfolgt.

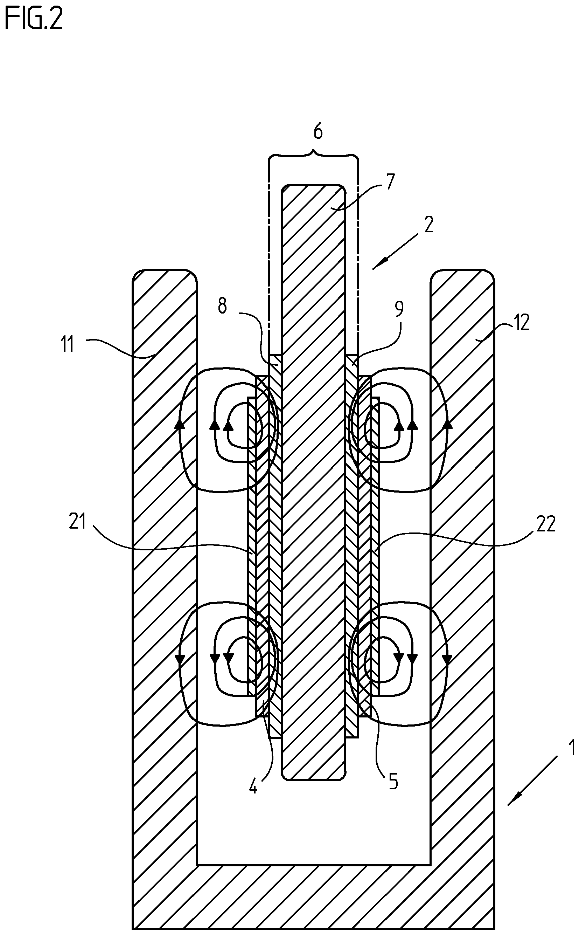

Der Aufbau der Abtasteinheit 2 wird anhand der Schnittdarstellung Figur 2 näher erläutert. Die erste Spulenanordnung 21, umfassend die Erregerwindung 210 und die Abtastwindungen 211, 212, ist auf einer ersten Leiterplatte 4 in geringem Abtastabstand zur ersten Messteilung 11 angeordnet. Die zweite Spulenanordnung 22, umfassend die Erregerwindung 220 und die Abtastwindungen 221, 222, ist auf einer zweiten Leiterplatte 5 in geringem Abtastabstand zur zweiten Messteilung 12 angeordnet. Zwischen der ersten Spulenanordnung 21 und der zweiten Spulenanordnung 22 ist eine Zwischenlage 6 aus weichmagnetischem Material angeordnet.

Das weichmagnetische Material als Zwischenlage 6 hat die Funktion die von der ersten Spulenanordnung 21 ausgehenden Feldlinien des magnetischen Wechselfeldes in einer Schicht des Materials der Zwischenlage 6 zu leiten und somit einen geschlossenen und räumlich begrenzten magnetischen Kreis zu bilden, sowie die von der zweiten Spulenanordnung 22 ausgehenden Feldlinien des magnetischen Wechselfeldes in einer Schicht des Materials der Zwischenlage 6 zu leiten und somit einen geschlossenen und räumlich begrenzten magnetischen Kreis zu bilden. Die Zwischenlage 6 trennt dadurch die Feldlinien ausgehend von der ersten Spulenanordnung 21 von den Feldlinien ausgehend von der zweiten Spulenanordnung 22.

Im ersten Ausführungsbeispiel besteht die Zwischenlage aus einem weichmagnetischen Kern 7, der beidseitig mit jeweils einer Schicht 8, 9 aus einem elektrisch nichtleitenden weichmagnetischen Material versehen ist. Aufgrund der schlechten elektrischen Leitfähigkeit bei einer Frequenz magnetischer Wechselfelder von einigen MHz (etwa 2 MHz) können in den Schichten 8, 9 keine Wirbelströme entstehen, die das Erregerfeld der jeweiligen Spulenanordnung 21, 22 dämpfen. Aufgrund der relativ hohen Permeabilität (sehr viel größer als 1) der Schichten 8, 9 wird das Erregerfeld in den Schichten 8, 9 geleitet und damit verstärkt. Dadurch wird verhindert, dass zu viel magnetischer Fluß bis zum Kern 7 gelangt, so dass dort keine Wirbelströme entstehen können, die das Erregerfeld dämpfen könnten. Die Dicke der Schichten 8, 9 beträgt vorzugsweise jeweils 100 µm bis 1000 µm. In vorteilhafter Weise besteht der Kern 7 aus einem weichmagnetischen elektrisch leitfähigen Metall. Als Material für den Kern eignet sich besonders weichmagnetischer Stahl. Die Dicke des Kerns 7 beträgt wenige mm.

Die Permeabilität des Kerns 7 ist vorzugsweise größer als die Permeabilität der beiden Schichten 8, 9. Damit wird erreicht, dass die Flussdichte im Kern 7 größer als in den Schichten 8, 9 ist. Externe Magnetfelder (Störfelder) verlaufen daher zum Großteil im Kern 7 und die Schichten 8, 9 kommen nicht so leicht in Sättigung. Die Permeabilität des Kerns 7 ist insbesondere um ein Vielfaches größer ist als die Permeabilität der Schichten 8, 9. Ist die Permeabilität des Kerns in der Größenordnung von 300, sollte die Permeabilität der Schichten in der Größenordnung von 100 oder kleiner sein, bei Frequenzen von 100 kHz bis 10 MHz.

Für die Schichten 8, 9 eignet sich insbesondere jeweils elektrisch nicht leitfähiges Matrixmaterial, in das weichmagnetische Partikel eingebettet sind. Die Schichten 8, 9 können daher von einer Folie aus Flux Field Directional Material gebildet sein. Als Matrixmaterial eignet sich Kunststoff, insbesondere Epoxidharz, in das die weichmagnetischen Partikel in Pulverform eingemischt sind.

Der mittig angeordnete Kern 7, die beidseitig darauf angeordneten Schichten 8, 9, die darauf aufgebrachten Leiterplatten 4, 5 und die darauf aufgebrachten planaren Spulenanordnungen 21, 22 bilden einen sandwichartigen Stapel. Es ergibt sich ein kompakter Aufbau und durch den metallenen Kern 7 wird auch ein mechanisch stabiler Aufbau erreicht.

Die Schichten 8, 9 und die Leiterplatten 4, 5 können auch gemeinsam in Form von Prepregs hergestellt sein, welche Fasern, Matrixmaterial und weichmagnetische Partikel aufweisen. Der Kern 7, die Schichten 8, 9 und die Leiterplatten 4, 5 können einen Multilayer-Aufbau bilden, wobei die einzelnen Lagen unter Wärmeeinfluss miteinander verpresst sind. Es ergibt sich ein steifer und kompakter sandwichartiger Aufbau.

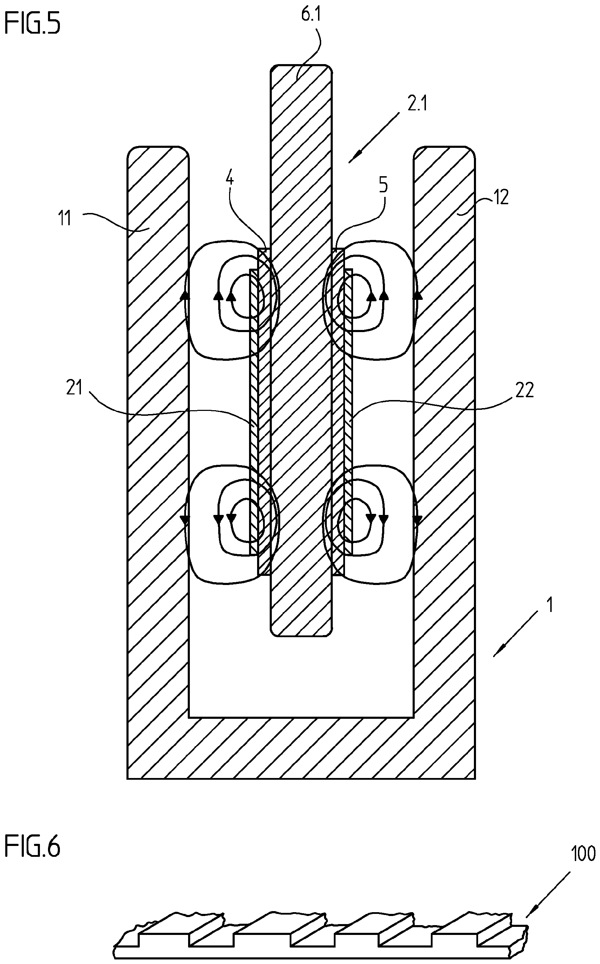

In der Figur 5 ist ein alternativer Aufbau einer Abtasteinheit 2.1 dargestellt. Die weichmagnetische Zwischenlage 6.1 besteht in diesem Fall aus einem Mu-Metall. In diesem Ausführungsbeispiel sind die Schichten 8, 9 nicht zwingend erforderlich, so dass die Leiterplatten 4, 5 mit den Spulenanordnungen 21, 22 direkt auf das Mu-Metall aufgebracht werden können. Die Zwischenlage 6.1 in Form eines Mu-Metalls ist elektrisch leitfähig, aufgrund der extrem hohen Permeabilität bei Wechselfeldern in der Größenordnung von 2 MHz ist die Endringtiefe der Wechselfelder aber sehr gering und breiten sich nur in wenigen µm Tiefe aus, so dass der effektive elektrische Widerstand sehr groß ist und daher wiederum keine bzw. nur vernachlässigbare Wirbelströme entstehen, die dem Erregerfeld der jeweiligen Spulenanordnung entgegenwirken und es dämpfen können.

In den obigen Ausführungsbeispielen ist die Maßstabeinheit 1 gebildet aus einem U-Profil, in bzw. an deren zwei parallel zueinander verlaufenden Schenkeln die Messteilungen 11, 12 ausgebildet sind. Die erste Messteilung 11 ist in einem der beiden Schenkel ausgebildet und die zweite Messteilung 12 in dem gegenüberliegenden und parallel dazu verlaufenden weiteren Schenkel des U-Profils ausgebildet. Die Maßstabeinheit 1 umgreift sozusagen die Abtasteinheit 2 bzw. 2.1.

Die Teilungselemente bilden im Ausführungsbeispiel induktive Koppelelemente, welche die Stärke der induktiven Kopplung zwischen der Erregerwindung 210, 220 und der Abtastwindung 211, 212, 221, 222 positionsabhängig modulieren, indem sich in einem Teilungselement jeweils Wirbelströme ausbilden, die gegen das Erregerfeld wirken. Als Material für die Maßstabeinheit 1 eignet sich in diesem Fall insbesondere gut elektrisch leitfähiges und unmagnetisches Material, beispielsweise Aluminium.

Figur 1 zeigt eine besonders vorteilhafte Ausgestaltung der Maßstabeinheit 1 in Form eines U-Profils, wobei die erste Messteilung 11 und die zweite Messteilung 12 jeweils aus einer Abfolge von Zähnen und Zahnlücken bestehen. Besonders biegesteif ist die Maßstabeinheit 1, wenn die Zahnlücken nicht bis zum Grund des U-Profils reichen, also beidseitig angrenzend an den Grund des U-Profils noch in Messrichtung X verlaufende durchgehende Stege verbleiben.

Die Ausführungsform der Maßstabeinheit 1 als U-Profil hat den Vorteil, dass die Maßstabeinheit 1 einstückig ausgeführt ist und die Messteilungen 11, 12 in der erforderlichen Genauigkeit zueinander ausgerichtet eingebracht werden können. Die erste Messteilung 11 und die zweite Messteilung 12 können durch Stanzen, Schneiden mittels Laser oder Wasserstrahl in einem Blechstreifen eingebracht werden, der danach zu dem U-Profil gebogen wird. Das U-Profil hat besonders zur Verwendung als lineare Maßstabeinheit 1 den Vorteil der hohen Biegesteifigkeit und ist selbsttragend und daher als Maßstabeinheit 1 gut handhabbar.

Alternativ können die Teilungselemente der Maßstabeinheit 100 auch gemäß der Figur 6 ausgeführt sein. Die Zahnlücken sind in diesem Fall jeweils ersetzt durch eine Materialschwächung und die Teilungselemente sind als in Richtung der Abtasteinheit 2 weisende Erhebungen ausgebildet. Diese alternative Ausgestaltung kann auch in den beiden einander gegenüberliegenden Schenkeln eines U-Profils vorgesehen sein, wobei sich ein besonders biegesteifer Aufbau ergibt.

In den oben erläuterten Ausführungsbeispielen und Nutzung des Nonius-Prinzips stimmt die Teilungsperiode P1 der ersten Messteilung 11 mit der Teilungsperiode P1 der zugehörigen Abtastwindungen 211, 212 sowie die Teilungsperiode P2 der zweiten Messteilung 12 mit der Teilungsperiode P2 der zugehörigen Abtastwindungen 221, 222 überein, wobei P1 von P2 geringfügig voneinander abweichen. Bei Nutzung des Nonius-Prinzips kann alternativ die Teilungsperiode der Abtastwindungen zur Abtastung der ersten Messteilung 11 und die Teilungsperiode der Abtastwindungen zur Abtastung der zweiten Messteilung 12 auch identisch sein, wie in der EP 2 851 655 A1 erläutert.

In den oben erläuterten Ausführungsbeispielen bilden die Teilungselemente induktive Koppelelemente, welche die Stärke der induktiven Kopplung zwischen der Erregerwindung 210, 220 und der Abtastwindung 211, 212, 221, 222 positionsabhängig modulieren, indem sich in einem Teilungselement jeweils Wirbelströme ausbilden, die gegen das Erregerfeld - also flussdämpfend - wirken. Die Maßstabeinheit kann aber auch dazu ausgelegt sein, dass die Teilungselemente flussverstärkend wirken. In diesem Fall kann die Maßstabeinheit aus Kunststoff bestehen, der mit weichmagnetischem Material oder Ferrit z.B. in Form von Pulver, gefüllt ist. Die Maßstabeinheit kann dann als Spritzgussteil ausgeführt sein.

In nicht gezeigter Weise kann die erste Messteilung der Maßstabeinheit ein Kettencode sein. Der Kettencode besteht in bekannter Weise aus einer Abfolge von Bits, von denen mehrere in Messrichtung aufeinanderfolgende gleichzeitig abgetastet werden und ein die Absolutposition eindeutig bestimmendes Codewort als grobe Absolutposition bilden. In diesem Fall kann die zweite Messteilung eine periodische Inkrementalteilung sein, die durch Interpolation die vom Kettencode gemessene Absolutposition weiter unterteilt und eine Feinposition bildet. Die Auswerteeinheit kombiniert die grobe Absolutposition des Kettencodes und die Feinposition der Inkrementalteilung zu einer resultierenden Absolutposition.

Alternativ kann eine Messteilung auch mehrere Spuren mit jeweils einer periodischen Inkrementalteilung umfassen.

Der Maßstabeinheit können in nicht gezeigter Weise zur Positionsmessung auch mehrere Abtasteinheiten zugeordnet sein. Dies kann zur redundanten Positionsmessung dienen, oder auch zur Sicherstellung der ununterbrochenen Positionsmessung über einen Stoß hinweg, bei der Abtastung von mehreren nacheinander angeordneten gestoßenen Maßstabeinheiten, wobei am Stoß von einer Abtasteinheiten auf eine andere Abtasteinheit umgeschaltet wird.

Durch die Erfindung ist eine Dicke der gesamten Positionsmesseinrichtung von einigen wenigen mm möglich. Der Aufbau ist mechanisch besonders stabil und weitgehend störsicher. Eine absolute Positionsmessung ist auf engstem Raum möglich.

Die erfindungsgemäße Positionsmesseinrichtung ist insbesondere für Transportsysteme und in der Automatisierungstechnik in Verbindung mit Linearantrieben geeignet.

Die induktive Positionsmesseinrichtung gemäß der Erfindung kann als Längenmesseinrichtung oder als Winkelmesseinrichtung ausgebildet sein.

## Patentansprüche

1. Induktive Positionsmesseinrichtung zur absoluten Positionsmessung, umfassend
- eine Maßstabeinheit (1, 100) mit einer in Messrichtung (X) verlaufenden ersten Messteilung (11) und einer parallel dazu verlaufenden und der ersten Messteilung (11) gegenüberliegenden zweiten Messteilung (12);
- eine Abtasteinheit (2, 2.1), die in einem Spalt zwischen der ersten Messteilung (11) und der zweiten Messteilung (12) angeordnet ist und zur Positionsmessung relativ zur Maßstabeinheit (1, 100) in Messrichtung (X) verschiebbar ist, wobei die Abtasteinheit (2, 2.1) eine erste Spulenanordnung (21) zur Abtastung der ersten Messteilung (11) und zur Erzeugung eines ersten positionsabhängigen Abtastsignals (S1, S11) umfasst und die Abtasteinheit (2, 2.1) eine der ersten Spulenanordnung (21) gegenüberliegende zweite Spulenanordnung (22) zur Abtastung der zweiten Messteilung (12) und zur Erzeugung eines zweiten positionsabhängigen Abtastsignals (S2, S21) umfasst,
wobei
zwischen der ersten Spulenanordnung (21) und der zweiten Spulenanordnung (22) zumindest eine Zwischenlage (6, 6.1) aus weichmagnetischem Material angeordnet ist.

2. Induktive Positionsmesseinrichtung nach Anspruch 1, wobei die Zwischenlage (6) aus einem weichmagnetischen Kern (7) und beidseitig darauf angeordneten elektrisch nicht leitfähigen weichmagnetischen Schichten (8, 9) besteht.

3. Induktive Positionsmesseinrichtung nach Anspruch 2, wobei der Kern (7) aus einem weichmagnetischen elektrisch leitfähigem Metall besteht.

4. Induktive Positionsmesseinrichtung nach Anspruch 2 oder 3, wobei die Permeabilität des Kerns (7) größer ist als die Permeabilität der beiden Schichten (8, 9).

5. Induktive Positionsmesseinrichtung nach einem der vorhergehenden Ansprüche 2 bis 4, wobei die Schichten (8, 9) jeweils ein elektrisch nicht leitfähiges Matrixmaterial umfassen, in das weichmagnetische Partikel eingebettet sind.

6. Induktive Positionsmesseinrichtung nach einem der vorhergehenden Ansprüche 2 bis 5, wobei der Kern (7) aus Stahl besteht und die Schichten (8, 9) jeweils eine Folie aus Flux Field Directional Material sind.

7. Induktive Positionsmesseinrichtung nach Anspruch 1, wobei die Zwischenlage (6.1) ein Mu-Metall umfasst.

8. Induktive Positionsmesseinrichtung nach einem der vorhergehenden Ansprüche, wobei die erste Messteilung (11) eine periodische Inkrementalteilung mit einer ersten Teilungsperiode (P1) ist und die zweite Messteilung (12) eine periodische Inkrementalteilung mit einer zweiten Teilungsperiode (P2) ist, die geringfügig von der ersten Teilungsperiode (P1) abweicht und die absolute Positionsmessung auf dem Nonius-Prinzip beruht.

9. Induktive Positionsmesseinrichtung nach Anspruch 8, wobei die erste Spulenanordnung (21) und die zweite Spulenanordnung (22) jeweils eine Erregerwindung (210, 220) und jeweils mehrere gegeneinander phasenverschobene periodische Abtastwindungen (211, 212, 221, 222) zur gleichzeitigen Abtastung mehrerer Teilungsperioden der ihr zugeordneten Messteilung (11, 12) aufweist.

10. Induktive Positionsmesseinrichtung nach einem der vorhergehenden Ansprüche, wobei die Abtasteinheit (2, 2.1) eine Auswerteeinheit (3) umfasst, welche dazu ausgelegt ist aus dem ersten positionsabhängigen Abtastsignal (S1, S11) und dem zweiten positionsabhängigen Abtastsignal (S2, S21) eine resultierende Absolutposition (AP) zu bilden und als digitales Datenwort am Ausgang zur Verfügung zu stellen.

11. Induktive Positionsmesseinrichtung nach einem der vorhergehenden Ansprüche, wobei die Maßstabeinheit (1) ein U-Profil ist und die erste Messteilung (11) und die zweite Messteilung (12) einander gegenüberliegend an den zwei parallel zueinander verlaufenden Schenkeln des U-Profils ausgebildet sind.

12. Induktive Positionsmesseinrichtung nach Anspruch 11, wobei die erste Messteilung (11) und die zweite Messteilung (12) aus einer Abfolge von Zähnen und Zahnlücken in den Schenkeln des U-Profils bestehen.

## Claims

1. Inductive position measurement device for absolute position measurement, comprising
- a scale unit (1, 100) with a first measuring graduation (11) extending in the measuring direction (X) and a second measuring graduation (12) extending parallel thereto and opposite the first measuring graduation (11);
- a scanning unit (2, 2.1), which is arranged in a gap between the first measuring graduation (11) and the second measuring graduation (12) and can be displaced relative to the scale unit (1, 100) in the measuring direction (X) for the position measurement, wherein the scanning unit (2, 2.1) comprises a first coil arrangement (21) for scanning the first measuring graduation (11) and for generating a first position-dependent scanning signal (S1, S11), and the scanning unit (2, 2.1) comprises a second coil arrangement (22), opposite the first coil arrangement (21), for scanning the second measuring graduation (12) and for generating a second position-dependent scanning signal (S2, S21),
wherein
at least one intermediate layer (6, 6.1) of soft magnetic material is arranged between the first coil arrangement (21) and the second coil arrangement (22).

2. Inductive position measurement device according to Claim 1, wherein the intermediate layer (6) consists of a soft magnetic core (7) and electrically nonconductive soft magnetic layers (8, 9) arranged on both sides thereof.

3. Inductive position measurement device according to Claim 2, wherein the core (7) consists of a soft magnetic electrically conductive metal.

4. Inductive position measurement device according to Claim 2 or 3, wherein the permeability of the core (7) is higher than the permeability of the two layers (8, 9).

5. Inductive position measurement device according to one of the preceding Claims 2 to 4, wherein the layers (8, 9) each comprise an electrically nonconductive matrix material in which soft magnetic particles are embedded.

6. Inductive position measurement device according to one of the preceding Claims 2 to 5, wherein the core (7) consists of steel and the layers (8, 9) are each a film of flux field directional material.

7. Inductive position measurement device according to Claim 1, wherein the intermediate layer (6.1) comprises a mu-metal.

8. Inductive position measurement device according to one of the preceding claims, wherein the first measuring graduation (11) is a periodic incremental graduation having a first graduation period (P1), and the second measuring graduation (12) is a periodic incremental graduation having a second graduation period (P2) which differs slightly from the first graduation period (P1), and the absolute position measurement is based on the vernier principle.

9. Inductive position measurement device according to Claim 8, wherein the first coil arrangement (21) and the second coil arrangement (22) have in each case one exciter winding (210, 220) and in each case multiple periodic scanning windings (211, 212, 221, 222) that are phase-shifted relative to one another for the simultaneous scanning of multiple graduation periods of the measuring graduation (11, 12) assigned to it.

10. Inductive position measurement device according to one of the preceding claims, wherein the scanning unit (2, 2.1) comprises an evaluation unit (3), which is designed to use the first position-dependent scanning signal (S1, S11) and the second position-dependent scanning signal (S2, S21) to form a resultant absolute position (AP) and to provide the latter on the output as a digital data word.

11. Inductive position measurement device according to one of the preceding claims, wherein the scale unit (1) is a U-section and the first measuring graduation (11) and the second measuring graduation (12) are formed opposite each other on the two limbs of the U-section extending parallel to each other.

12. Inductive position measurement device according to Claim 11, wherein the first measuring graduation (11) and the second measuring graduation (12) comprise a sequence of teeth and tooth gaps in the limbs of the U-section.

## Revendications

1. Dispositif inductif de mesure de position pour la mesure de position absolue, comprenant:
- une unité de règle graduée (1, 100) avec une première graduation de mesure (11) s'étendant dans la direction de mesure (X) et une seconde graduation de mesure (12) s'étendant parallèlement à celle-ci et opposée à la première graduation de mesure (11);
- une unité de balayage (2, 2.1), qui est disposée dans une fente entre la première graduation de mesure (11) et la seconde graduation de mesure (12) et qui est déplaçable dans la direction de mesure (X) pour la mesure de position par rapport à l'unité de règle graduée (1, 100), dans lequel l'unité de balayage (2, 2.1) comprend un premier agencement de bobine (21) pour le balayage de la première graduation de mesure (11) et pour la production d'un premier signal de balayage dépendant de la position (S1, S11) et l'unité de balayage (2, 2.1) comprend un second agencement de bobine (22) pour le balayage de la seconde graduation de mesure (12) et pour la production d'un second signal de balayage dépendant de la position (S2, S21),
dans lequel au moins une couche intermédiaire (6, 6.1) en matériau magnétiquement doux est disposée entre le premier agencement de bobine (21) et le second agencement de bobine (22).

2. Dispositif inductif de mesure de position selon la revendication 1, dans lequel la couche intermédiaire (6) se compose d'un noyau magnétiquement doux (7) et de couches magnétiquement douces (8, 9) électriquement non conductrices disposées de part et d'autre sur celui-ci.

3. Dispositif inductif de mesure de position selon la revendication 2, dans lequel le noyau (7) se compose d'un métal magnétiquement doux électriquement conducteur.

4. Dispositif inductif de mesure de position selon la revendication 2 ou 3, dans lequel la perméabilité du noyau (7) est plus élevée que la perméabilité des deux couches (8, 9).

5. Dispositif inductif de mesure de position selon l'une quelconque des revendications précédentes 2 à 4, dans lequel les couches (8, 9) comprennent respectivement un matériau de matrice électriquement non conducteur, dans lequel des particules magnétiquement douces sont noyées.

6. Dispositif inductif de mesure de position selon l'une quelconque des revendications précédentes 2 à 5, dans lequel le noyau (7) se compose d'acier et les couches (8, 9) sont respectivement constituées par une feuille de Flux Field Directional Material.

7. Dispositif inductif de mesure de position selon la revendication 1, dans lequel la couche intermédiaire (6.1) contient un mu-métal.

8. Dispositif inductif de mesure de position selon l'une quelconque des revendications précédentes, dans lequel la première graduation de mesure (11) est une graduation incrémentielle périodique avec une première période de graduation (P1) et la seconde graduation de mesure (12) est une graduation incrémentielle périodique avec une seconde période de graduation (P2), qui diffère légèrement de la première période de graduation (P1) et la mesure de position absolue repose sur le principe du vernier.

9. Dispositif inductif de mesure de position selon la revendication 8, dans lequel le premier agencement de bobine (21) et le second agencement de bobine (22) présentent respectivement une spire d'excitation (210, 220) et respectivement plusieurs spires de balayage périodiques (211, 212, 221, 222) déphasées les unes par rapport aux autres pour le balayage simultané de plusieurs périodes de graduation de la graduation de mesure (11, 12) qui leur est associée.

10. Dispositif inductif de mesure de position selon l'une quelconque des revendications précédentes, dans lequel l'unité de balayage (2, 2.1) comprend une unité d'évaluation (3), qui est conçue pour former une position absolue résultante à partir du premier signal de balayage dépendant de la position (S1, S11) et du second signal de balayage dépendant de la position (S2, S21), et pour la fournir à la sortie sous forme de mot de données numérique.

11. Dispositif inductif de mesure de position selon l'une quelconque des revendications précédentes, dans lequel l'unité de règle graduée (1) est un profilé en U et la première graduation de mesure (11) et la seconde graduation de mesure (12) sont disposées en opposition l'une à l'autre sur les deux ailes du profilé en U s'étendant parallèlement l'une à l'autre.

12. Dispositif inductif de mesure de position selon la revendication 11, dans lequel la première graduation de mesure (11) et la seconde graduation de mesure (12) se composent d'une succession de dents et d'entre-dents dans les ailes du profilé en U.
